Europäisches Patentamt

European Patent Office

Office européen des brevets

(11) Publication number: **0 337 518**
**A1**

(12) **EUROPEAN PATENT APPLICATION**

(21) Application number: **89200497.9**

(22) Date of filing: **01.03.89**

(51) Int. Cl.⁴: **F16B 7/10 , F16B 7/14 , A47C 3/28 , A47C 3/20**

(30) Priority: **14.04.88 NL 8800970**

(43) Date of publication of application:
**18.10.89 Bulletin 89/42**

(84) Designated Contracting States:
**DE FR GB IT NL**

(71) Applicant: ZWAARDVIS B.V.
Duinweg 2
NL-5482 VR Schijndel(NL)

(72) Inventor: van den Heuvel, Anthonius
Josephus Maria
Bermershof 426
NL-5403 WV Uden(NL)

(74) Representative: Kooy, Leendert Willem et al
OCTROOIBUREAU VRIESENDORP & GAADE
P.O. Box 266
NL-2501 AW The Hague(NL)

(54) **A device for locking two elements to each other which are telescopically displaceable relative to each other.**

(57) According to the invention the outer surface of the inner element (16) is provided with a plurality of axial grooves (18) and an axial rib is formed on a cylinder segment-shaped pressure plate (22), which is displaceable radially inwardly by means of a radially moveable member (30), so that the axial rib is pressable into any one of said axial grooves.

FIG.3

EP 0 337 518 A1

# A device for locking two elements to each other which are telescopically displaceable relative to each other.

The present invention relates to a device for locking two elements to each other which are telescopically displaceable relative to each other, wherein an axial groove is applied in the outer surface of the inner element and the outer element being provided with an internal radial projection, which is displaceable and pressable inwardly relative to the inner element into said groove by means of a radially movable member, said member being mounted in an outer hub which is fixed on the outer element.

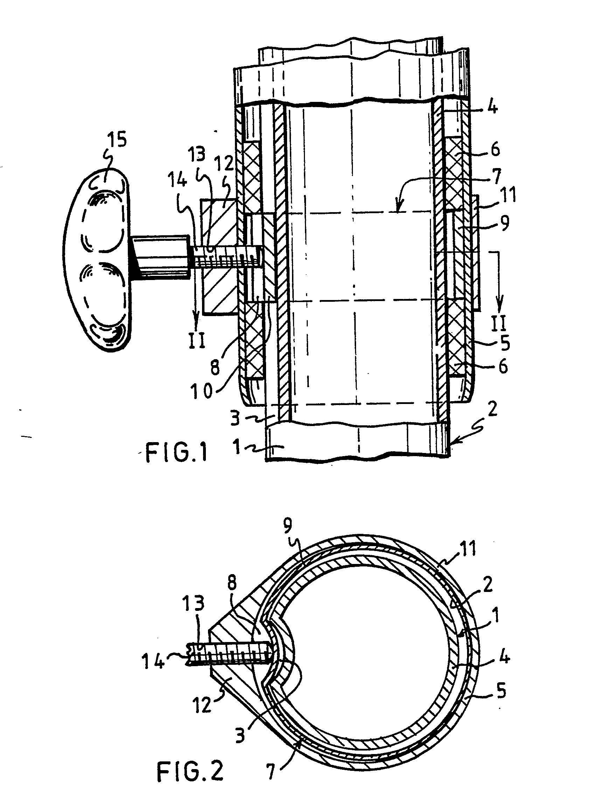

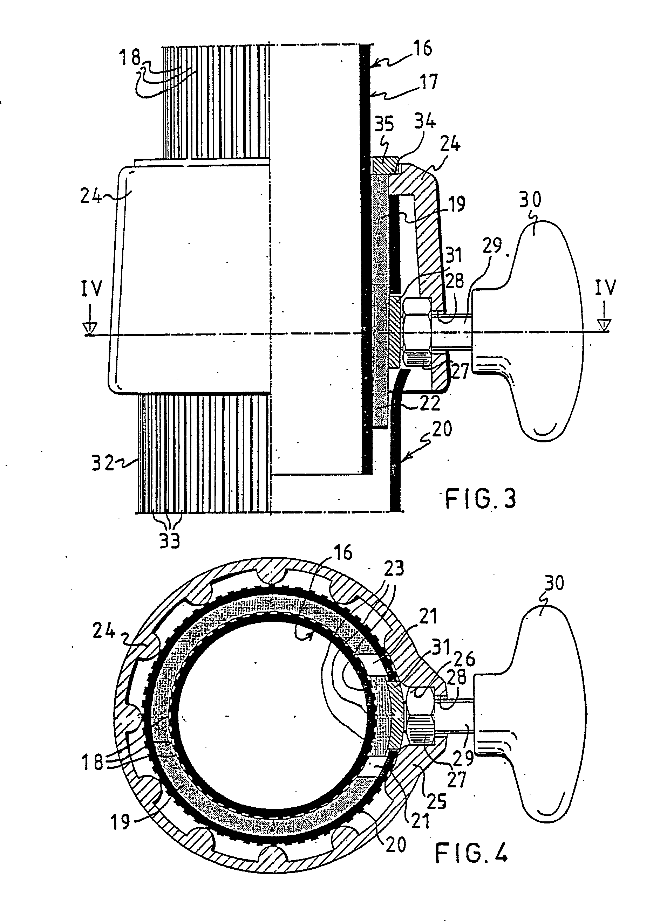

With such a device, known from the practice of Applicants, and drawn in the figures 1 and 2 and being applied in e.g. the pedestal of a driver's seat of a vessel or in a pedestal of an other object that must be adjustable and lockable in height and around the centreline of the pedestal, one single relatively deep axial groove 3 is applied in the outer surface 2 of the inner element 1, which is formed by inwardly displacing a portion of the wall 4 of the inner element. In the outer element 5 two rings 6 of synthetic material (e.g. nylon) are mounted, between which rings 6 a ring 7 of the same metal as the elements 1 and 5 is placed. The ring 7 has an outer diameter which is somewhat smaller than the inner diameter of the outer element 5, so that the ring 7 can rotate freely in the outer element. This ring 7 is provided with an axial groove 8, which is formed by inwardly displacing a portion of the wall 9 of the ring 7, by which an internal projection 10 is formed. On the outer element 5 at the position of the rings 6 and 7 a hub 11 is fixed, which is provided with a local thickening 12 having a screw thread bore 13, in which a screw thread rod 14 is screwed being provided with a control knob 15.

For locking the elements 1 and 5 relative to each other the ring 7 has to be placed with the axial groove 8 opposite the screw thread rod 14 and the inertal projection 10 of the ring 7 has to be placed opposite the axial groove 3 in the inner element, after which the control button can be turned to press the projection 10 rigidly into the groove 3. Putting the different parts of the device in the right position relative to each other is a difficult and time-consuming job, which moreover must be performed accurately. If the projection 10 is not opposite the groove 3, the projection 10 essentially exerts only a point load on the inner element, which gives almost no grip to the lock. Further a great radial force is executed on the ring 7 and consequently on the inner element 1 by the tightened screw thread rod, which leads to relatively great local deformation of both the ring 7 and the inner element 1, as well as of the hub 11. Finally the mounting of the inner element 1 in the nylon rings 6 is little stable.

The invention aims at removing the above described objections of the known locking device.

This object is attained because according to the invention the outer surface of the inner element is provided with a plurality of axial grooves divided equally over the circumference and because the projection is formed on a cylinder segment-shaped pressure plate extending circumferentially over more than one axial groove in the inner element, which is concentrical relative to the inner element and which at the inside is provided with at least one axial rib which fits in each axial groove in the outer surface of the inner element.

By applying these measures it is attained that the inner and outer element can be locked in any position relative to each other, wherein the blocking force is equal in all positions and circumferentially also optimal. Moreover the pressure force of the radially movable member is divided over a relative large surface of the inner element by the cylinder segment-shaped pressure plate, so that deformation of the inner element is avoided, anyway reduced to a minimum.

With a preferred embodiment of the locking device according to the invention a plurality of equally spaced ribs are applied on the inner surface of the pressure plate, said ribs simultaneously fitting in the axial grooves opposite thereof in the outer surface of the inner element.

With this embodiment the circumferentially operating force, which attempts to turn both telescopical elements relative to each other, is divided optimally over a plurality of ribs on the pressure plate and a plurality of grooves in the inner element respectively.

With a special appropriate embodiment of the locking device according to the invention the pressure plate is partially disconnected by machining from a ring forming one piece therewith between the inner and the outer element, which ring is secured to the outer element and mounted on the inner element with a sliding fit.

With this embodiment of the locking device according to the invention a stable mounting of the inner and outer elements relative to each other is attained, while the ring with the pressure plate has a simple and cheap construction.

Further, according to the invention, the outer surface of the inner element is provided with a plurality of circumferential grooves equally divided over the length of the inner element and the inner surface of the pressure plate is provided with at least one circumferential rib, which fits in each circumferential groove in the outer surface of the inner element.

By applying these measures it is attained that the blocking force on the elements in axial direction relative to each other is optimal and both elements may be locked relative to each other in a very large number of axial positions. With this embodiment of the locking device according to the invention the pressure force of the pressure plate on the inner element only needs to have a very small value, because essentially it is already sufficient if the ribs on the pressure plate extend completely into the grooves in the outer surface of the inner element.

Preferably a plurality of equally spaced circumferential ribs are applied on the inner surface of the pressure plate, which simultaneously fit in the circumferential grooves opposite thereof in the outer surface of the inner element.

The invention will further be elucidated on the basis of the drawings with a few examples.

Figure 3 is a longitudinal section of one embodiment of the locking device according to the invention,

figure 4 is a cross-section according to the line IV-IV in figure 3;

figure 5 is a longitudinal section of another embodiment of the locking device according to the invention, and

figure 6 is a cross-section according to VI-VI in figure 5.

The telescopical pedestals, which are drawn in the figures 3 to 6, are especially meant for driver's seats of vessels, but may naturally also be used for other seats or objects which have to be locked at a certain height and/or in a certain position. There the thinnest tube is mounted to e.g. the seat of the driver's seat, while the thickest tube is secured optionally detachably and rotatably to the foot of the seat, which is fastened to the deck of the vessel.

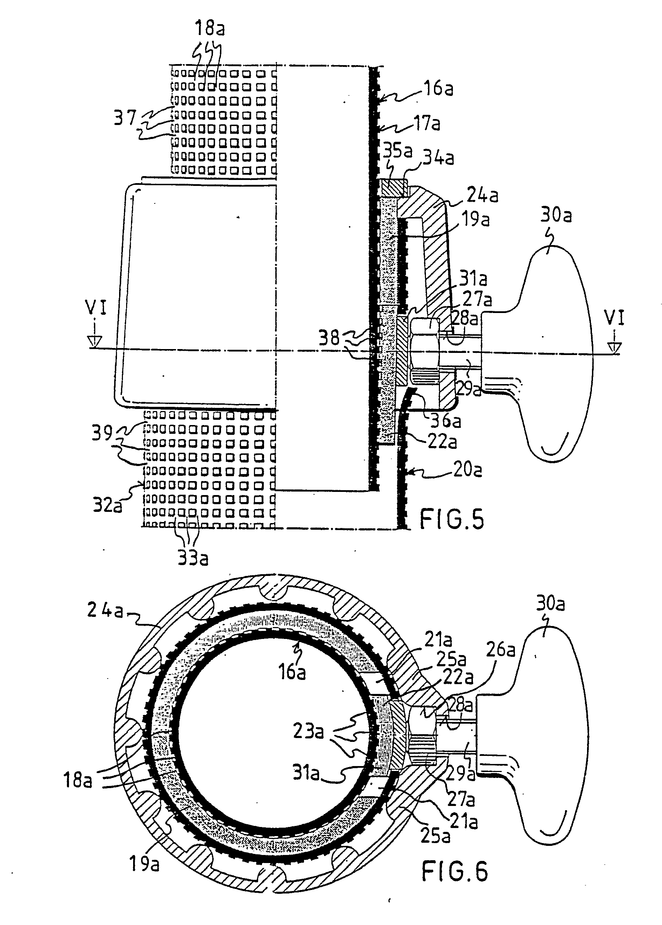

With the embodiment of the locking device according to the invention, which is drawn in the figures 3 and 4, a plurality of axial grooves 18 equally divided over the circumference are applied in the outer surface 17 of the inner element, in this case the inner tube 16.

The inner tube 16 is mounted axially slidably and rotatably in a ring 19 of synthetic material, which in its turn is mounted with a press fit in the end of the outer element, the outer tube 20. In the ring 19 of synthetic material two parallel axial recesses 21 are milled over a portion of the length, by which a partly detached, cylinder segment-shaped pressure plate 22 is formed which in a

certain manner is pivotally relative to the ring 19 about its securing line to the ring 19. At the inside, thus at the face turned towards the inner tube 16, of the pressure plate 22 at least one and preferably a plurality of ribs 23 is/are applied, which simultaneously fit in the axial grooves 18 opposite thereof in the outer surface 17 of the inner tube 16.

On the one end, the top end of the ring 19 a clamping hub 24 is mounted with a pres fit, which is provided with a radial thickening 25 with an internal axial recess 26, in which a screw nut 27 is fixed. In the clamping hub 24 aligned with the screw nut 27 a radial bore 28 is applied and through the bore 28 and in the screw nut 27 a screw thread rod 29 is screwed, which at its end is provided with a knob 30. The screw thread rod 29 abuts with its inner end to a cylinder segment-shaped distribution plate 31, which is placed in a recess 32 in the outer tube 20 and which serves to divide the force of the screw thread rod 29 as evenly as possible over the pressure plate 22. For this purpose the distribution plate 31 may be manufactured from a strong, rigid material, e.g. steel.

The outer tube 20 can be adjustably lockable in the foot of the pedestal of the seat by means of a similar device as described above on the basis of the figures 3 and 4 and, for that purpose axial grooves 33 are also applied in the outer surface 32 of the outer tube 20.

In the upper side of the clamping hub 24 a recess 34 is applied, in which a bearing ring 35 is laid, resting upon the upper end of the ring 19 and which may serve as a rotation bearing for the bottom of the seat of the driver's seat (not drawn). Optionally between the underside of the seat or on a support of the seat mounted on the inner tube, a diametrically divided ring consisting of two halves may be mounted, the two halves of which are pulled resiliently towards each other and one half of which at the inside is provided with a radial plug, which may extend into one or more radial bores in the inner tube, which are axially spaced from each other and which serve for additionally blocking the inner tube 16 axially in various positions relative to the outer tube 20 (not drawn).

In order to lock the clamping hub 24 circumferentially relative to the outer tube 20, the bottom edge 36 of the recess in the outer tube 20, in which the distribution plate 31 is placed, is bend outwardly into the internal recess 26 in the thickening 25 in the clamping hub 24, so that the clamping hub 24 is fixed circumferentially on the outer tube 20.

The operation of the above described device is as follows:
For adjusting the inner tube 16 relative to the outer tube 20 firstly the screw thread rod 29 with the button 30 is turned out off the screw nut 27, so that the clamping force of the pressure plate 22 on the inner tube 16 is cancelled. Now the inner tube 16 may be shifted relative to the outer tube 20 in the desired position and the rod 29 may be turned into the screw nut 27 again, whereby the pressure plate 22 pivots inwardly about the connecting line with the ring 19 and the axial rib(s) 23 on the plate 22 extend(s) into the axial grooves 18 in the outer surface 17 of the inner tube 16.

In order to facilitate the engagement of the axial ribs 23 on the pressure plate 22 into the axial grooves 18 in the inner tube, the side flanks of the ribs 23 and the side walls of the grooves 18 may taper in the direction of the upper plane and the bottom respectively, so that they have the same cross-section and the upper edges of the ribs and of the grooves may be rounded off optionally, so that the ribs 23 are pressed as it were automatically into the grooves 18 and operate self-centering relative to the grooves 18.

In this clamped position of the tubes 16 and 20 relative to each other they are blocked circumferentially or in the direction of rotation relative to each other and they are also locked axially relative to each other owing to the relatively large friction surface between the pressure plate 22 and the inner tube 16 and between the ring 19 and the pressure plate 22. The axial locking of the inner tube 16 and the outer tube 20 is improved as yet by tapering flanks of the ribs 23 and tapering walls of the grooves 18, because thereby a larger friction surface is formed between the pressure plate 22 and the inner tube 16.

The locking device according to the figures 5 and 6 is substantially equal to that according to the figures 3 and 4, wherein the same and/or similar parts are provided with the same reference numerals, with the addition "a", and which have the same construction, function and operation in both embodiments.

Contrary to the embodiment according to the figures 3 and 4, with the embodiment according to the figures 5 and 6 the outer surface 17a of the inner tube 16a is moreover provided with a plurality of circumferential grooves 37 equally divided over the length of the inner tube 16a and the inner surface of the pressure plate 22a is provided with at least one, preferably a plurality of equally spaced circumferential ribs 38, which simultaneously fit in the opposite circumferential grooves 37 in the outer surface 17a of the inner element 16a.

Also in this embodiment of the locking device according to the invention the side walls of the axial grooves 18a and the circumferential grooves 37 and the side flanks of the axial ribs 23a and the circumferential ribs 38 may taper in the direction of the bottom and upper surface respectively, so that the ribs have the same cross-section as the grooves. There the upper edges of the grooves 18 and 37 and of the ribs 23a and 38 may be rounded off too.

By applying these measures the same locking is attained in axial direction as in circumferential direction, while the inner tube 16a and the outer tube 20a both axially and circumferentially are adjustable and lockable in a very large number of positions relative to each other.

By analogy with the device according to the figures 3 and 4 the outer tube 20a of the embodiment according to the figures 5 and 6 may be provided with a plurality of equally spaced axial grooves 33a and with a plurality of equally spaced circumferential grooves 39, e.g. the foot of the pedestal of the seat being provided with a similar locking device as described above.

## Claims

1. A device for locking two elements to each other, said elements being telescopically displaceable relative to each other, wherein an axial groove is applied in the outer surface of the inner element and the outer element being provided with an internal radial projection, which is displaceable and pressable inwardly relative to the inner element into said groove by means of a radially movable member, said member being mounted in an outer hub which is fixed on the outer element, **characterized in that** the outer surface (17;17a) of the inner element (16;16a) is provided with a plurality of axial grooves (18;18a) being equally divided over the circumference and that the projection is formed on a cylinder segment-shaped pressure plate (22;22a) extending circumferentially over more than one axial groove in the inner element, which is concentrically relative to the inner element and which at the inside is provided with at least one axial rib (23;23a) which fits in each axial groove in the outer surface of the inner element.

2. A device according to claim 1, **characterized in that** on the inner surface of the pressure plate (22,22a) a plurality of equally spaced ribs (23;23a) are applied, which simultaneously fit in axial grooves (18;18a) opposite thereof in the outer surface (17;17a) of the inner element (16;16a).

3. A device according to claim 1 or 2, **characterized in that** the pressure plate (22;22a) by machining is partially disconnected from a ring (19;19a) forming one piece therewith between the inner (16;16a) and the outer element (20;20a), which ring is secured to the outer element and mounted on the inner element with a sliding fit.

4. A device according to claim 3, **characterized in that** the ring (19;19a) with the pressure plate (22;22a) is manufactured from wear-resistant synthetic material and that a distribution plate (31;31a) of rigid material is placed between the pressure plate and the end of the radially movable member (29;29a), the shape of the distribution plate being adapted to that of the pressure plate.

5. A device according to one of the preceding claims, **characterized in that** the outer surface (17a) of the inner element (16a) is provided with a plurality of circumferential grooves (37) equally divided over the length of the inner element and that the inner surface of the pressure plate (22a) is provided with at least one circumferential rib (38), which fits in each circumferential groove in the outer surface of the inner element.

6. A device according to claim 5, **characterized in that** on the inner surface of the pressure plate (22a) a plurality of equally spaced circumferential ribs (38) are applied, which simultaneously fit in circumferential grooves (37) opposite thereof in the outer surface of the inner element (16a).

7. A device according to one of the preceding claims, **characterized in that** the side walls of the axial grooves (18,18a; 33,33a) and of the circumferential grooves (37;39) in the inner (16;16a) and outer element (20;20a) respectively, taper in the direction of the bottom of the grooves and that the side flanks of the axial ribs (23;23a) and of the circumferential ribs (38) on the pressure plate (22;22a) taper into the direction of the upper surface of the ribs, such, that they have the same cross-section as the grooves.

8. A device according to one of the claims 1 up to and including 7, **characterized in that** the upper edges of the grooves (18,18a; 33,33a; 37,39) and the ribs (23;23a;38) are rounded off.

FIG.1

FIG.2

FIG. 3

FIG. 4

FIG.5

FIG.6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A-2 088 828 (MODERN'TUBE) * Figures * | 1 | F 16 B 7/10 |
| | --- | | F 16 B 7/14 |
| A | GB-A- 376 589 (THE TAN-SAD CHAIR CO. LTD) * Figure * | 1 | A 47 C 3/28 A 47 C 3/20 |
| | --- | | |
| A | NL-A-6 602 854 (ACCESS EQUIPMENT LTD) * Figures * | 5,6 | |
| | --- | | |
| A | WO-A-8 603 562 (HÖISETH) | | |
| | ----- | | |

TECHNICAL FIELDS SEARCHED (Int. Cl.4)

F 16 C
A 47 C

The present search report has been drawn up for all claims

| Place of search | Date of completion of the search | Examiner |
|---|---|---|
| THE HAGUE | 03-07-1989 | BARTSCH A.W. |